Europäisches Patentamt

European Patent Office

Office européen des brevets

(11) Publication number: **0 312 610 B1**

## EUROPEAN PATENT SPECIFICATION

(45) Date of publication of patent specification: **09.12.92**  (51) Int. Cl.⁵: **B01D 1/18**

(21) Application number: **88903930.1**

(22) Date of filing: **27.04.88**

(86) International application number:
**PCT/JP88/00414**

(87) International publication number:
**WO 88/08322 (03.11.88 88/24)**

(54) **VACUUM DRYING METHOD AND APPARATUS.**

(30) Priority: **27.04.87 JP 103803/87**

(43) Date of publication of application:
**26.04.89 Bulletin  89/17**

(45) Publication of the grant of the patent:
**09.12.92 Bulletin  92/50**

(84) Designated Contracting States:
**CH DE FR LI**

(56) References cited:
**FR-A- 991 832        GB-A- 932 297
GB-A- 1 191 032       JP-A- 5 482 764
JP-A- 5 586 501       JP-Y- 5 228 862
US-A- 2 572 857       US-A- 4 568 258**

(73) Proprietor: **OHKAWARA KAKOHKI CO., LTD.
3847, Ikebecho Midori-ku
Yokohama-shi Kanagawa 226(JP)**

(72) Inventor: **ITOH, Takashi Ohkawara Kakohki
Co., Ltd.
3847 Ikebecho, Midori-ku Yokohama-shi
Kanagawa 226(JP)**
Inventor: **OHKAWARA, Masaaki/ Ohkawara
Kakohki Co., Ltd.
3847 Ikebecho, Midori-ku Yokohama-shi
Kanagawa 226(JP)**

(74) Representative: **Peuscet, Jacques et al
Cabinet Peuscet 68, rue d'Hauteville
F-75010 Paris(FR)**

**Description**

TECHNICAL FIELD

The present invention relates to a vacuum drying method and apparatus. More particularly, the present invention relates to a vacuum drying method and apparatus which can produce a powder consisting of spherical particles having an average particle diameter of 500 $\mu$m or below and containing a very small amount of a residual solvent

BACKGROUND ART

From US-2,572,857 a method of drying liquids is known. This method consists in subjecting the liquid to heat and pressure, reducing the pressure of the liquid to a point sufficient to cause some of the liquid to vaporize, superheating the vapor thus formed, and then spraying the remaining liquid concentrate into an atmosphere of such vapor.

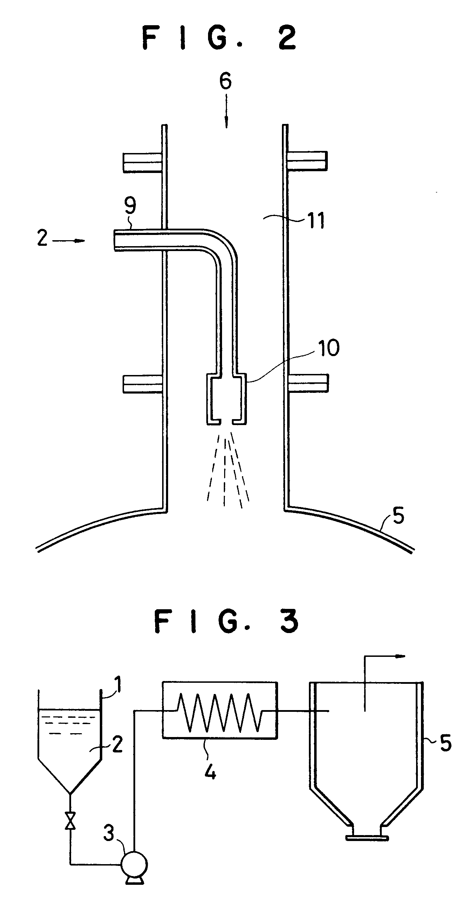

As the vacuum drying apparatus for obtaining a powder by continuously removing volatile components from a feed liquid or slurry containing solid components (e.g. polymer), there is known, for example, an apparatus as shown in Fig. 3 (see, for example, Japanese Utility Model Publication No.28862/1977, Japanese Utility Model Publication No.16161/1981 and Japanese Patent Publication No. 38272/1977).

In this apparatus, a feed liquid 2 in a feed liquid chamber 1 is continuously sent to a long tube heater 4 by a pump 3 and heated therein; then, the feed liquid 2 is introduced into a vacuum chamber 5 from the side and subjected to vacuum evaporation, whereby a powder is produced.

In the above apparatus, the amount of the solvent remaining in the powder obtained can be made very small (e.g. 1% by weight or below) by appropriately selecting such conditions as temperature, flow rate, vacuum and the like. However, the particles constituting the powder obtained take an agglomerate form when a feed liquid containing a polymer, etc. is used and takes various forms (e.g. an agglomerate having a pulverized stone shape) when a slurry containing a polymer, etc. is used. When in the above conventional apparatus the feed liquid is sprayed from a nozzle, the resulting powder always comprises scaly particles of, for example, 5 $\mu$m in thickness, 20 $\mu$m in width and 200 $\mu$m in length and it is impossible to obtain a powder comprising spherical particles having an average particle diameter of 500 $\mu$m or below and containing a residual solvent in an amount of 1% by weight or below (these conditions are required in order for a powder to be preferably used in a powder coating, etc.).

Hence, the present invention was completed in order to solve the above-mentioned problems of the prior art.

An object of the present invention is to provide a vacuum drying method capable of obtaining a powder containing a residual solvent in an amount of, for example, 1% by weight or below and spherical particles having an average particle diameter of 500 $\mu$m or below, as well as an apparatus therefor.

Further objects and advantages of the present invention will become apparent from the following description.

DISCLOSURE OF THE INVENTION

According to the present invention, there are provided a vacuum drying method wherein a feed liquid consisting of a solid, non-volatile or low-volatile component and a solvent is heated and then subjected to vacuum evaporation in a vacuum chamber to produce a powder, the method being characterized in that the feed liquid is sprayed, before being introduced into the vacuum chamber, into a superheated solvent vapor zone to finally obtain a powder consisting of spherical particles and containing a very small amount of a residual solvent, and a vacuum drying apparatus comprising first heating means for heating a feed liquid consisting of a solid, non-volatile or low-volatile component and a first solvent, second heating means for heating a second solvent to produce a solvent vapor, a vacuum chamber in which said feed liquid and said vapor are vacuum evaporated to produce a powder, a solvent vapor zone for containing said vapor, said zone being located between said second heating means and said vacuum chamber, and a nozzle disposed in said zone for spraying said feed liquid into said vapor therein.

BRIEF EXPLANATION OF THE DRAWINGS

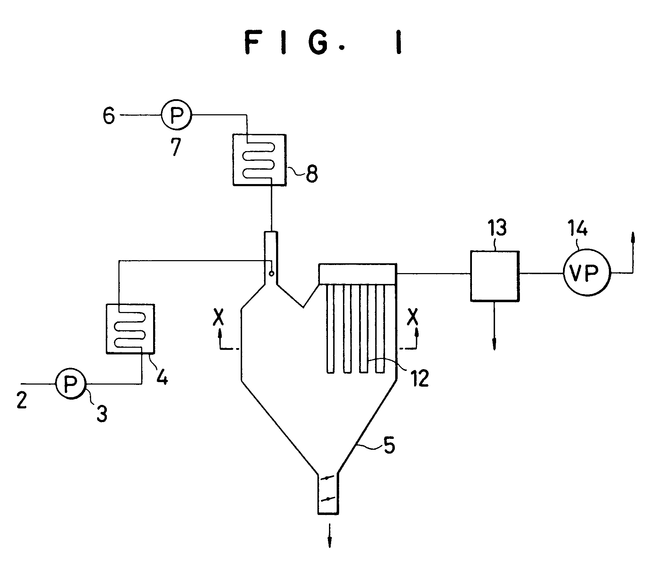

Fig. 1 is a schematic view showing an example of the vacuum drying apparatus of the present invention; Fig. 2 is a partially enlarged view of Fig. 1; and Fig. 3 is a view showing a conventional vacuum

2

drying apparatus.

## BEST MODE FOR CARRYING OUT THE INVENTION

In Fig. 1 and Fig. 2, a feed liquid 2 is sent to a long tube heater 4 by a pump 3, and a solvent 6 is sent to a long tube heater 8 by a pump 7. The solvent 6 is superheated to a superheated vapor state in the heater 8, and the superheated solvent vapor forms a solvent vapor zone of high temperature and high velocity in a section succeeding the heater 8. The feed liquid 2 is heated to a desired temperature in the heater 4 and then is sprayed into a vacuum chamber 5. In this case, as shown in Fig. 2, a front end (a nozzle for atomization) 10 of a pipe 9 for feeding the feed liquid 2 is inserted into a portion of a solvent vapor zone 11 close to the vacuum chamber 5 (the zone 11 extends from the long tube heater 8 to the vacuum chamber 5); the feed liquid 2 is injected from the nozzle 10 into the solvent vapor zone 11; and both the injected feed liquid 2 and the vapor of the solvent 6 are fed into the vacuum chamber 5 at a velocity of about 100 m/s . The feed liquid in the vacuum chamber 5 is subjected to vacuum evaporation, whereby the volatile component in the feed liquid is removed and a desired powder product is obtained.

The gas which is generated in the vacuum chamber 5 as a result of the vacuum evaporation is passed through a bag filter 12 provided within the vacuum chamber 5 to remove accompanying particles, and then leaves the vacuum chamber 5. Thereafter, the gas is passed through a condenser 13 to recover the accompanying solvent and then discharged to outside. 14 is a vacuum pump.

As seen above, in this example, the nozzle 10 of the pipe 9 for feeding the feed liquid 2 is inserted into the portion close to the vacuum chamber 5, of the solvent vapor zone 11 extending from the long tube heater 8 to the vacuum chamber 5; the feed liquid 2 which has been heated to about 150 °C is injected from the nozzle 10 into the solvent vapor 6 (the solvent vapor zone 11) to form fine spherical particles; the particles are fed into the vacuum chamber 5 and subjected to vacuum evaporation to remove the volatile component contained in the particles; as a result, the powder obtained from the vacuum evaporation consists of spherical particles (different from conventional scaly or agglomerate particles) having particle diameters of 500 $\mu$m or below and contains a very small amount of a residual solvent.

As the feed liquid, there can be used a liquid comprising a solid, non-volatile or low-volatile component (main component) and a volatile component (solvent). Using, as the feed liquid, for example, a liquid comprising a coating component is preferable, because in the present invention a powder obtained contains a residual solvent in an amount of 1% by weight or below and comprises spherical particles having particle diameters of 500 $\mu$m or below and accordingly the powder can be used by itself as a final powder coating.

Investigations were conducted on the temperatures and amounts of the feed liquid and the solvent right before entering the vacuum chamber and the following matters were found out. That is, it is desirable that the temperature of the solvent be at least 10 °C higher than the boiling point of the solvent at the pressure within the vacuum chamber and that the amount of the solvent 6 be 0.5-5 times, preferably 0.7-3 times the amount of the solvent contained in the feed liquid.

When the temperature of the solvent is lower than (the boiling point of the solvent at the pressure within the vacuum chamber + 10 °C) or when the amount of the solvent 6 is smaller than 0.5 time the amount of the solvent contained in the feed liquid, the amount of the residual solvent in the resulting product is larger. Meanwhile, when the amount of the solvent 6 is larger than 5 times the amount of the solvent contained in the feed liquid, the resulting product comprises an increased amount of randomly shaped particles and a reduced amount of spherical particles.

Next, there are explained specific examples for producing a powder product from a feed liquid and solvent.

## Example 1

Vacuum drying of a feed liquid was effected using a vacuum chamber as shown in Fig. 1 (the X-X section of the upper portion has a rectangular shape of 2,000 x 1,000 mm and the height of the upper portion is 2,000 mm).

The following operational conditions were employed.

Feed liquid:

Epoxy resin (soluble in solvent) 20% by weight

Inorganic pigment (insoluble in solvent) 13% by weight

Solvent (Methyl ethyl ketone, boiling point:79.6 °C) 67% by weight

Softening point of epoxy resin: about 90 °C

Treated amount of feed liquid: 7 kg/h (treated amount of solvent in feed liquid: 4.7 kg/h)

Feed liquid temperature: 150 °C
Fed amount of solvent: 5 kg/h (1.06 times the treated amount of solvent infeed liquid)
Solvent temperature: 150 °C
Boiling point at pressure within vacuum chamber: -3°C
Vacuum within vacuum chamber: 2670 Pa (20 Torr)

Incidentally, the wall of the vacuum chamber 5 was heated to 40 °C by a jacket (not shown).

As a result of an operation under the above conditions, there was obtained a powder containing a residual solvent in an amount of 0.7% by weight and comprising spherical particles having an average particle diameter of 50 $\mu$m.

Example 2

Vacuum drying of a feed liquid was effected using a vacuum chamber consisting of a vertical cylinder of 1,000 mm in diameter and 3,000 mm in height and a bag filter annexed to the vacuum chamber, of 1,000 mm in diameter and 2,000 mm in height.

The following operational conditions were employed.

Feed liquid:
Acrylic resin 15% by weight
Filler and coloring agent (consisting mainly of $CaCO_3$) 10% by weight
Solvent (acetone) 75% by weight
Sprayed amount of feed liquid: 20 kg/h (sprayed amount of solvent in feed liquid: 15 kg/h)
Feed liquid temperature: 120 °C
Spraying pressure: 49,05'10$^4$ Pa
Vacuum chamber:
Hot water jacket temperature: 30 °C
Vacuum: 2002 Pa (15 Torr)

As a result of an operation under the above conditions, the following results were obtained.

|  | Example 2 |
|---|---|
| Fed amount of solvent (kg/h ) | 30 |
| Solvent temperature (°C) | 150 |
| Main shape of particles | Spherical |
| Average particle size ($\mu$m) | 60 |
| Amount of residual solvent (wt.%) | 0.5 |

As is clear from the above, there was obtained a powder consisting of spherical particles and containing a residual solvent in a very small amount of 0.5% by weight.

It was found as a general tendency that when the amount of solvent fed is decreased, the resulting powder comprises ellipsoidal particles and contains a larger amount of a residual solvent and when the amount of solvent fed is increased, the resulting powder comprises scaly particles.

APPLICABILITY IN INDUSTRY

As described above, in the vacuum drying method and apparatus of the present invention, a feed liquid is sprayed into a solvent vapor before being introduced into a vacuum chamber, whereby a powder consisting of spherical particles having particle diameters of 500 $\mu$m or below can be produced; moreover, the amount of the solvent remaining in the powder obtained can be made very small (e.g. 1% by weight or below). Accordingly, the vacuum drying method and apparatus of the present invention are very useful particularly in production of powder coating, etc.

**Claims**

**1.** A vaccum drying method wherein a feed liquid consisting of a solid, non-volatile or low-volatile component and a solvent is heated and then subjected to vacuum evaporation in a vacuum chamber to produce a powder, the method being characterized in that the feed liquid is sprayed, before being introduced into the vacuum chamber, into a superheated solvent vapor zone to finally obtain a powder consisting of spherical particles and containing a very small amount of a residual solvent, the solvent

EP 0 312 610 B1

vapor being introduced into the solvent vapor zone in an amount of 0.5 to 5 times the amount of the solvent in the feed liquid, and the solvent vapor being introduced into the vacuum chamber in a superheated vapor state of a temperature at least 10°C higher than the boiling point of the solvent at the pressure within the vacuum chamber.

2. A vacuum drying method according to claim 1, wherein the feed liquid comprises a coating component.

3. A vacuum drying apparatus comprising :
- first heating means (4) for heating a feed liquid consisting of a solid, non-volatile or low-volatile component and a first solvent
- second heating means (8) for heating a second solvent to produce a solvent vapor ;
- a vacuum chamber (5) in which said feed liquid and said vapor are vacuum evaporated to produce a powder ;
- a solvent vapor zone (11) for containing said vapor, said zone (11) being located between said second heating means (8) and said vacuum chamber (5) ; and
- a nozzle (10) disposed in said zone (11) for spraying said feed liquid into said vapor therein.

**Patentansprüche**

1. Vakuumtrocknungsverfahren, bei dem eine Förderflüssigkeit bestehend aus einer festen, nichtflüchtigen oder niedrigflüchtigen Komponente und einem Lösungsmittel erwärmt und dann einer Vakuumverdampfung in einer Vakuumkammer ausgesetzt wird, um ein Pulver herzustellen, dadurch gekennzeichnet, daß die Förderflüssigkeit vor der Einleitung in die Vakuumkammer in eine überhitzte Lösungsmittel-Dampfzone eingesprüht wird, um letztlich ein Pulver zu erhalten, das aus sphärischen Partikeln besteht und eine sehr kleine Menge an einem Lösungsmittelrest enthält, wobei der Lösungsmitteldampf in die Lösungsmittel-Dampfzone in einer Menge von 0,5 bis 5 mal der Menge des Lösungsmittels in der Förderflüssigkeit eingeleitet wird, und wobei der Lösungsmitteldampf in die Vakuumkammer in einem überhitzten Dampfzustand einer Temperatur von wenigstens 10° C höher als dem Siedepunkt des Lösungsmittels unter dem Druck innerhalb der Vakuumkammer eingeleitet wird.

2. Vakuumtrocknungsverfahren nach Anspruch 1, dadurch gekennzeichnet, daß die Förderflüssigkeit eine Anstrichkomponente umfaßt.

3. Vakuumtrocknungsvorrichtung mit:
- einer ersten Heizeinrichtung (4) zum Erwärmen einer Förderflüssigkeit bestehend aus einer festen, nichtflüchtigen oder niedrigflüchtigen Komponente und einem ersten Lösungsmittel;
- einer zweiten Heizeinrichtung (8) zum Erwärmen eines zweiten Lösungsmittels zur Herstellung eines Lösungsmitteldampfes;
- einer Vakuumkammer (5), in welcher die Förderflüssigkeit und der Dampf vakuumverdampft werden, um ein Pulver herzustellen;
- eine Lösungsmittel-Dampfzone (11) zur Aufnehmen des Dampfes, wobei die Zone (11) zwischen der zweiten Heizeinrichtung (8) und der Vakuumkammer (5) angeordnet ist; und
- einer Düse (10), die in der Zone (11) zum Einsprühen der Förderflüssigkeit in den Dampf angeordnet ist.

**Revendications**

1. Une méthode de séchage sous vide, dans laquelle un liquide d'alimentation, composé d'un composant solide non-volatile ou peu volatile et d'un solvant, est chauffé et puis soumis à une évaporation sous vide dans une chambre à vide, pour produire une poudre, la méthode étant caractérisée en ce que le liquide d'alimentation est pulvérisé, avant d'être introduit dans la chambre à vide, dans une zone à vapeur de solvant surchauffée, pour obtenir finalement une poudre composée de particules sphériques et contenant une très petite quantité de solvant résiduel, la vapeur de solvant étant introduite dans la zone à vapeur de solvant en une quantité de 0,5 à 5 fois la quantité du solvant dans le liquide d'alimentation et la vapeur de solvant étant introduite dans la chambre à vide à l'état de vapeur surchauffée à une température d'au moins 10°C supérieure au point d'ébullition du solvant à la pression à l'intérieur de la chambre à vide.

5

**2.** Une méthode de séchage sous vide suivant la revendication 1, dans laquelle le liquide d'alimentation comprend un composant de revêtement.

**3.** Un appareil de séchage sous vide comprenant:

- un premier moyen de chauffage (4), destiné à chauffer un liquide d'alimentation composé d'un composant solide non-volatile ou peu volatile et d'un premier solvant,
- un second moyen de chauffage (8), destiné à chauffer un second solvant, pour produire une vapeur de solvant,
- une chambre à vide (5) dans laquelle sont évaporés sous vide ledit liquide d'alimentation et ladite vapeur, pour produire une poudre,
- une zone à vapeur de solvant (11), destinée à contenir ladite vapeur, ladite zone (11) étant située entre ledit second moyen de chauffage (8) et ladite chambre à vide (5), et
- une tuyère (10) disposée dans ladite zone (11), destinée à pulvériser ledit liquide d'alimentation dans ladite vapeur dans cette dernière.

# F I G . I

# F I G . 2

# F I G . 3